# EUROPÄISCHE PATENTSCHRIFT

(11) **EP 2 803 501 B1**
(45) Veröffentlichungstag und Bekanntmachung des Hinweises auf die Patenterteilung: **11.07.2018**
(21) Anmeldenummer: 14157128.1
(22) Anmeldetag: 28.02.2014
(51) Int. Cl.: B60C 11/11, B60C 11/12, B60C 11/13, B60C 11/03

(54) **Fahrzeugluftreifen**
Pneumatic tyre for a vehicle
Pneu de véhicule

(30) Priorität: 16.05.2013 DE 102013105054
(43) Veröffentlichungstag der Anmeldung: 19.11.2014
(73) Patentinhaber: Continental Reifen Deutschland GmbH, 30165 Hannover (DE)
(72) Erfinder: Schürmann, Oliver, 30855 Langenhagen (DE); Barho, Erhard, 30163 Hannover (DE)
(74) Vertreter: Finger, Karsten

(56) Entgegenhaltungen:
- EP-A2- 0 354 718
- JP-A- 2006 176 055
- JP-A- 2009 107 376

## Beschreibung

Die Erfindung betrifft einen Fahrzeugluftreifen mit einem profilierten Laufstreifen mit Profilstrukturen, die Profilpositive, wie in Profilblockreihen angeordnete Profilblöcke, und Profilnegative, wie Umfangsrillen und Querrillen, umfassen, wobei die Profilpositive, über den Reifenumfang gemäß zumindest einer Pitchfolge und nach einem Verfahren der Pitchlängenvariation geräuschoptimiert angeordnet sind.

Bei der Gestaltung von Laufstreifen von Fahrzeugluftreifen ist es üblich, zur Optimierung bzw. Verminderung des Reifen- /Fahrbahngeräusches entweder im kompletten Laufstreifen oder in über den Umfang umlaufenden Abschnitten des Laufstreifens, beispielsweise in Profilblockreihen, gleichartige Profilstrukturen in über den Umfang aufeinanderfolgenden Pitches mit unterschiedlichen Umfangslängen anzuordnen. Die Pitches werden üblicher Weise in zwei bis fünf unterschiedlichen Umfangslängen vorgesehen, deren Längenverhältnis zueinander festgelegt wird und deren günstigste Aufeinanderfolge über den Reifenumfang, die Pitchfolge, mittels eines Rechenprogrammes ermittelt wird. Zum Thema der Ausführung von Pitches und Pitchfolgen von Laufstreifen findet sich in der Patentliteratur eine Vielzahl von Lösungsvorschlägen. So ist beispielsweise aus der EP 0 970 822 A2 ein Fahrzeugluftreifen bekannt, dessen Laufstreifen zumindest eine Schulterblockreihe und eine dieser benachbart verlaufende weitere Blockreihe aufweist. Ausgehend von der Schulterblockreihe wird die Pitchfolge derart abgestimmt, dass an keiner Stelle mehr als zwei Pitches übereinstimmender Länge unmittelbar aufeinander folgen. Die Anzahl der Blöcke in den Schulterblockreihen soll dabei das Zwei- oder Dreifache der Anzahl der Blöcke in den den Schulterblockreihen benachbart verlaufenden weiteren Blockreihen betragen. Aus der EP 1 431 077 B1 ist ein Fahrzeugluftreifen mit einem Laufstreifen bekannt, welcher sich aus Profilpositiven zusammensetzt, die durch im oder über den Zentralbereich diagonal verlaufende Rillen sowie durch Querrillen strukturiert sind, wobei die diagonal verlaufenden Rillen gemeinsam mit den Profilpositiven Basispitches mit zumindest zwei verschiedenen Umfangslängen bilden, die über den Reifenumfang gemäß einer Pitchfolge geräuschoptimiert angeordnet sind. Die Basispitches sind in zumindest einem in Umfangsrichtung verlaufenden Laufstreifenabschnitt durch die Querrillen zumindest in zwei unterschiedliche Profilpositivgruppen gegliedert, die in weitere Pitches geteilt sind.

*Aus der* JP 2006 176055 A *ist es bekannt, auf Profilblöcken bei in Umfangsrichtung verlaufenden Kanten lokal schmale Erhebungen auszubilden, die zu einer Verbesserung der Bremseigenschaften auf Eis- und Schnee beitragen sollen. Der aus der* JP 2009 107376 A *bekannte Reifen weist bei den Querkanten der Profilblöcke in axialer Richtung erstreckende auf den Blöcken aufgesetzte Rippen auf Aus der* EP 0 354 718 A2 *ist ein Fahrzeugluftreifen bekannt, welcher einen Laufstreifen mit zumindest drei in Umfangsrichtung umlaufenden Profilblockreihen aus im Wesentlichen rechtwinkeligen Profilblöcken aufweist. Die Profilblöcke sind an ihren in Umfangsrichtung verlaufenden Bereichen mit Seitennuten versehen. Der Reifen soll ein gutes Verhalten auf schnee- und eisbedeckten Straßen und eine geringe Geräuschentwicklung sowie einen hohen Abriebswiderstand aufweisen.*

Die aus dem Stand der Technik bekannten üblichen Verfahren der Pitchlängenvariation sind technisch schon sehr ausgereift. Eine darüber hinaus gehende Optimierung zur Verminderung des Reifen- /Fahrbahngeräusches oder zur gezielten Elimination bestimmter störender Frequenzen im Frequenzspektrum ist kaum mehr möglich und dadurch eingeschränkt, dass die Profilelemente nicht beliebig lang oder beliebig kurz ausgeführt werden können. Beispielsweise sind der Wahl von Umfangslängen von Profilblöcken aus Stabilitätsgründen Grenzen gesetzt. Eine zu große unterschiedliche Umfangs- oder Querstabilität von Profilelementen kann beispielsweise sehr nachteilig für das Abriebsverhalten eines Laufstreifens sein.

Der Erfindung liegt die Aufgabe zu Grunde, bei einem Fahrzeugluftreifen der eingangs genannten Art eine Möglichkeit der Beeinflussung des Reifen- /Fahrbahngeräusches aufzufinden, mit der sich gezielt Frequenzen im Frequenzspektrum eliminieren bzw. "verschieben" lassen.

Gelöst wird die gestellte Aufgabe erfindungsgemäß dadurch, dass auf Profilpositiven lokal Rippen angeordnet sind, welche sich unter einem Winkel von mindestens 10° zur axialen Richtung des Laufstreifens erstrecken und über den Reifenumfang gemäß einer geräuschoptimierten Abfolge angeordnet sind, die sich von der Pitchfolge der Profilpositive, auf welchen die Rippen positioniert sind, unterscheidet.

Die zusätzlichen Rippen auf den Profilpositiven erzeugen einen Anteil im Reifen-/Fahrbahngeräusch, der durch die rechnerische Ermittlung der Abfolge bzw. Positionierung der Rippen derart sein kann, dass ursprünglich störende Frequenzen in der Pitchfolge gezielt eliminiert werden können und stattdessen Frequenzen im Frequenzspektrum generiert werden, die weitaus weniger oder gar nicht störend sind.

Die Rippen verlaufen insbesondere einem Winkel von 5° bis 70°, vorzugsweise bis zu 45°, zur axialen Richtung.

Für eine gezielte Beeinflussung des durch die Pitchfolge der Profilstrukturen, wie Profilblöcke und Rillen, beim Abrollen generierten Reifen-/Fahrbahngeräusches ist es vorteilhaft, wenn die Rippen vergleichsweise klein dimensioniert sind. Die Rippen sollten daher eine *in radialer Richtung ermittelte* Höhe von 0,7 mm bis 1,2 mm und eine Breite an oder bei ihrer Basis aufweisen, die zwischen 0,7 mm und 3 mm, insbesondere bis zu 2 mm beträgt. Für ein regelmäßiges Abriebsbild ist es von Vorteil, wenn die Rippen eine konstante und für alle Rippen gleich große *in radialer Richtung ermittelte* Höhe sowie in Umfangsrichtung eine konstante und für alle Rippen gleich große Breite aufweisen. Die in Umfangsrichtung ermittelte Breite der Rippen *ist vorzugsweise gleichgroß oder größer als ihre in radialer Richtung ermittelte Höhe.*

Vorteilhaft sind ferner Rippenquerschnittsformen, die gerundet sind oder die mit Rundungen an Eckbereichen versehen sind. Die Rippen können daher im Querschnitt beispielsweise kuppelförmig, rechteckig, trapezförmig oder kreisabschnittsförmig ausgeführt sein.

Die Rippen können ferner *entlang der kompletten axialen Erstreckung der Profilpositive* oder über einen Teil der axialen Erstreckung der Profilpositive verlaufen, insbesondere über mindestens 50 % der axialen Erstreckung.

Für die Umfangs- und Quersteifigkeit der Profilpositive, insbesondere wenn diese Profilblöcke sind, sowie ein gleichmäßiges Abriebsbild ist es ferner vorteilhaft, wenn zumindest eine der auf einem Profilblock bzw. Profilpositiv vorgesehenen Rippen unmittelbar an eine Rillenflanke einer Querrille anschließt oder in einem Abstand von höchsten 3 mm und parallel zu einer Querrille verläuft. Je nach Ausführung der Profilpositive können ferner innerhalb eines Umfangsabschnittes, beispielsweise innerhalb einer Profilblockreihe oder einer Profilbandes, die Rippen zueinander parallel verlaufen.

Im Laufstreifenprofil können Profilpositive vorhanden sein, die keine Rippen aufweisen. Andererseits ist es möglich, dass Profilpositive vorhanden sind, welche mit mehr als zwei Rippen versehen sind.

Weitere Merkmale, Vorteile und Einzelheiten der Erfindung werden nun anhand der schematischen Zeichnung, die mehrere Ausführungsbeispiele darstellt, näher beschrieben. Dabei zeigen
Fig. 1 eine erste Ausführungsform der Erfindung anhand einer Teilabwicklung von zwei Profilblockreihen eines Laufstreifens eines Fahrzeugluftreifens,
Fig. 2 einen Schnitt entlang der Linie II-II der Fig. 1,
Fig. 3 in einer zu Fig.1 analogen Darstellung ein weiteres Ausführungsbeispiel der Erfindung und
Fig. 4 ebenfalls in einer zu Fig. 1 analogen Darstellung ein drittes Ausführungsbeispiel der Erfindung.

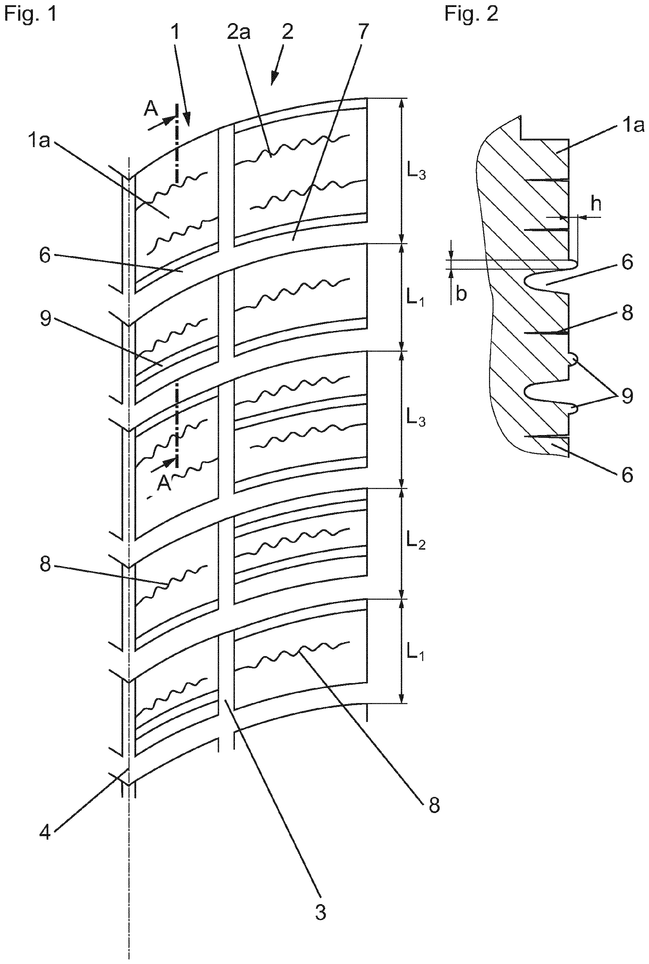

Die Figuren 1, 3 und 4 zeigen beispielhaft und schematisch zwei Profilblockreihen 1,2 eines Laufstreifens für einen Fahrzeugluftreifen, insbesondere einen PKW-Reifen in Radialbauart. Die beispielhaft gezeigten Profilblockreihen 1, 2 sind voneinander durch eine gerade und in Umfangsrichtung umlaufende Umfangsrille 3 getrennt, die Profilblockreihe 1 schließt an eine weitere, beispielsweise entlang der Äquatorlinie verlaufende Umfangsrille 4 an. Laufstreifenaußenseitig kann an die Profilblockreihe 2 eine zusätzliche, schulterseitige Profilblockreihe anschließen, die Profilblockreihe 2 kann jedoch selbst die schulterseitig verlaufende Profilblockreihe sein. In der zweiten, nicht gezeigten Laufstreifenhälfte können analoge Profilstrukturen oder von den gezeigten abweichend ausgeführte Strukturen vorgesehen sein. Die Profilierung des Laufstreifens kann auch ein laufrichtungsgebunden ausgeführtes und/oder ein sogenanntes asymmetrisch ausgeführtes Laufstreifenprofil ergeben, wobei bekannter Weise bei Reifen mit asymmetrischen Laufstreifenprofilen darauf zu achten ist, an welcher Position eines Fahrzeuges die Fahrzeugluftreifen montiert werden. Jede Profilblockreihe 1, 2 setzt sich aus in Umfangsrichtung aneinander gereihten Profilblöcken 1a, 2a zusammen, welche voneinander durch Querrillen 6, 7 getrennt sind. Bei der gezeigten Ausführungsform entspricht die über den Reifenumfang vorliegende Gesamtanzahl der Profilblöcke 1a in der Profilblockreihe 1 der Anzahl der Profilblocke 2a in der Profilblockreihe 2, wobei die Profilblöcke 1a, 2a derart positioniert sind, dass die Querrillen 6, 7 jeweils miteinander fluchtend verlaufen. Diese fluchtende Anordnung ist jedoch nur beispielhaft und es können die Profilblöcke 1a, 2a auch in Umfangsrichtung gegeneinander versetzt angeordnet sein, sodass die Querrillen 6, 7 ebenfalls in Umfangsrichtung gegeneinander versetzt verlaufen.

Die dargestellten Profilstrukturen - vor allem die Profilblöcke 1a und 2a sowie die Querrillen 6 und 7 - befinden sich in in Umfangsrichtung aufeinander folgende Pitches unterschiedlicher Umfangslängen L₁, L₂, L₃. Das Gliedern eines Laufstreifenprofils in Umfangsrichtung in aneinander gereihte gleichartige Abschnitte (Pitches) ist seit langem üblich und dient dem Zweck, das Reifen- /Fahrbahngeräusch zu minimieren bzw. zu optimieren, sodass die beim Abrollen des Reifens entstehenden hörbaren Frequenzen derart auf das Frequenzspektrum verteilt sind, dass sie für das menschliche Gehör möglichst wenig störend wirken. Für die in den Figuren 1, 3 und 4 dargestellten Ausführungsformen sind drei Pitches unterschiedlicher Umfangslängen L₁, L₂ und L₃ vorgesehen, wobei jedes Pitch jeweils eine Querrille 6 und 7 und jeweils einen der Querrille 6, 7 benachbarten Profilblock 1a, 2a umfasst. Eine für das Reifen-/Fahrbahngeräusch günstige Aufeinanderfolge von Pitches der unterschiedlichen Längen L₁, L₂ und L₃, die Pitchfolge, wird üblicherweise mit Hilfe eines Rechenprogrammes ermittelt.

Das Verhältnis der Länge des längsten Pitch mit der Umfangslänge L₃ zu Länge des kürzesten Pitch mit der Umfangslänge L₁ kann, wie es im Stand der Technik üblich ist, zwischen 1,3 und 1,6 betragen.

In den Profilblöcken 1a und 2a sind ferner beispielhaft Einschnitte 8 dargestellt. In Profilblöcken 1a, 2a, die zu Pitches der Umfangslängen L₁ und L₂ gehören ist, jeweils nur ein Einschnitt 8 vorgesehen, in Profilblöcken 1a, 2a, welche zu Pitches der Umfangslänge L₃ gehören, sind jeweils zwei Einschnitte 8 dargestellt.

Gemäß der Erfindung sind auf den Oberflächen der Profilblöcke 1a, 2a - diese Oberflächen ergeben sich aus der Torusgestalt des Reifens meist als leicht nach außen bombierte Flächen - Rippen 9 aufgesetzt. Die Rippen 9 werden bei der Vulkanisation des Reifens in einer Vulkanisationsform durch entsprechende Vertiefungen in den das Profil formenden Formsegmenten ausgebildet. Grundsätzlich ist pro Profilblock 1a, 2a zumindest eine Rippe 9 vorgesehen, wobei es durch die Anordnung beziehungsweise Aufeinanderfolge der Rippen 9 über den Reifenumfang innerhalb einer Profilblockreihe 1, 2 auch möglich sein kann, dass zwischendurch in einem Profilblock 1a, 2a keine Rippe 9 ausgebildet wird. Bei den in den Figuren 1, 3 und 4 gezeigten Ausführungsformen befindet sich in Profilblöcken 1a, 2a, die zu einem Pitch der Umfangslänge L₁ gehören, jeweils eine Rippe 9, in Profilblöcken 1a, 2a, die zu Pitches der Umfangslängen L₂ oder L₃ gehören, entweder eine Rippe 9 oder zwei Rippen 9. Die Rippen 9 weisen, wie es die Schnittdarstellung in Fig. 2 zeigt, eine Höhe h von 0,7 - 1,2 mm auf, insbesondere beträgt die Höhe h in der Größenordnung von 1 mm. Die Höhe h ist vorzugsweise konstant und für sämtliche Rippen 9 eines Laufstreifenprofils gleich groß. Die Breite b der Rippen 9 an oder bei ihrer Basis beträgt zumindest der Höhe h und maximal 3 mm, insbesondere bis zu 2 mm. Insbesondere weist jede Rippe 9 eine über ihre Erstreckung gleich bleibende Breite b auf. Die Querschnittsform der Rippen 9 kann, wie in Fig. 2 gezeigt, kuppelförmig, sie kann jedoch auch rechteckig, trapezförmig oder kreisabschnittförmig sein.

Bei der in Fig. 1 gezeigten Ausführungsform verlaufen die Rippen 9 sämtlich parallel zueinander und zumindest im Wesentlichen parallel zu den die Querrillen 6, 7 begrenzenden Kanten der Profilblöcke 1a, 2a und durchqueren die Profilblöcke 1a, 2a. Infolge der parallelogrammähnlichen Form der Profilblöcke 1a, 2a und der damit einhergehenden Neigung der Querrillen 6, 7 relativ zur axialen Richtung des Laufstreifens verlaufen auch die Rippen 9 unter einem Winkel zur axialen Richtung. Eine Winkelstellung relativ zur axialen Richtung, insbesondere von 5° bis 70°, vorzugsweise bis zu 45°, ist vorteilhaft, um sicherzustellen, dass die Rippen 9 beim Abrollen des Reifens sukzessive mit dem Untergrund in Kontakt kommen. Ein gleichzeitiger Kontakt jeder Rippe 9 zum Untergrund beim Abrollen des Reifens hätte ungünstige Auswirkungen auf das Abrollgeräusch. Fig. 1 zeigt ferner unterschiedliche Möglichkeiten der Anordnung der Rippen 9 auf den Profilblöcken 1a, 2a. So kann beispielsweise auf einem Profilblock 1a, 2a zumindest eine Rippe 9 vorgesehen sein, welche unmittelbar an die Rillenflanke einer Querrille 6 oder einer Querrille 7 anschließt, wie es die Schnittdarstellung in Fig. 2 für die beiden äußeren Rippen 9 zeigt. Es können ferner in einem Profilblock auch zwei Rippen 9 parallel zueinander und in einem Abstand von den die Querrillen 6, 7 begrenzenden Blockkanten verlaufen. Bevorzugt sind Ausführungsformen, bei welchen die zumindest eine vorgesehene Rippe 9 entweder, wie bereits beschrieben, unmittelbar an die Profilblockkante zu einer Querrille 6, 7 anschließend ausgebildet ist oder sich in einem geringen Abstand zu dieser von bis zu 3 mm befindet.

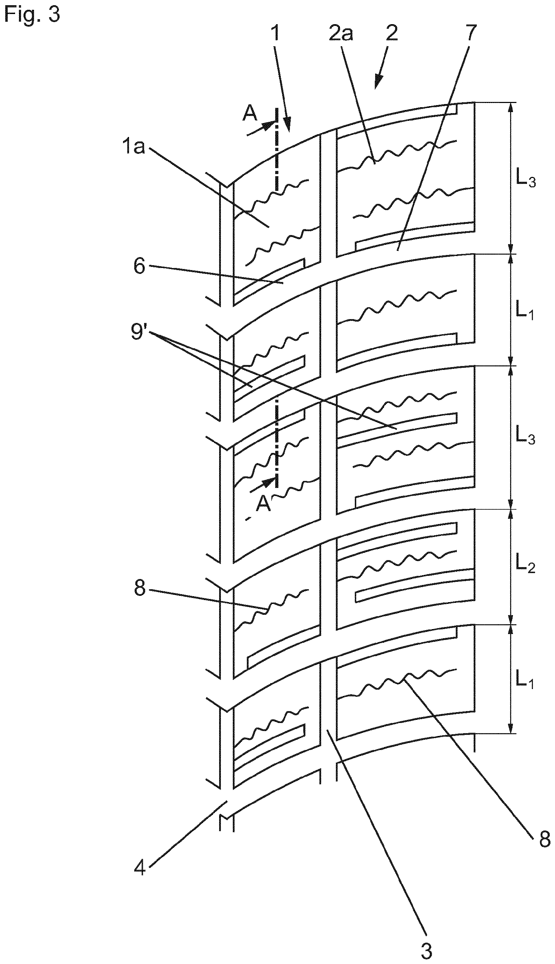

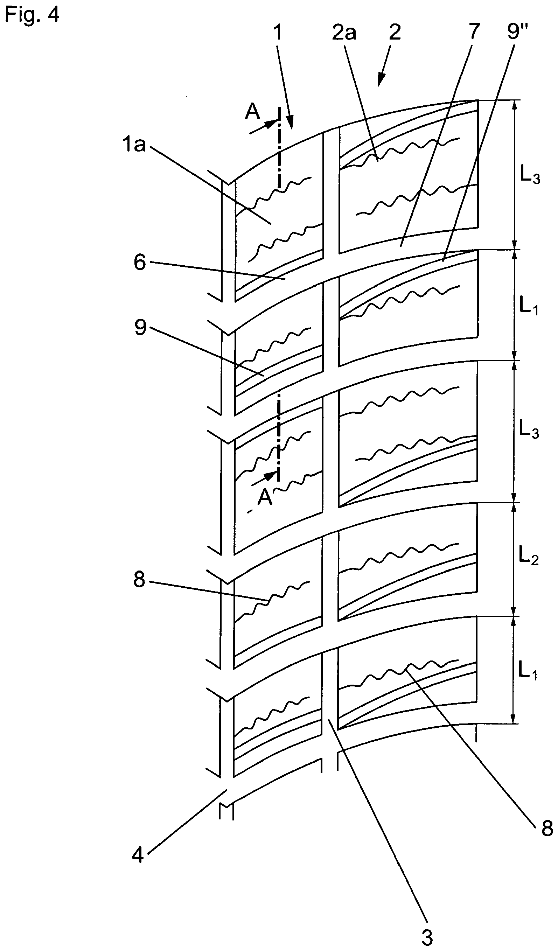

Fig. 3 zeigt eine Ausführungsform, bei der die Positionen der Rippen 9' auf den Profilblöcken 1a, 2a jenen der Rippen 9 der in Fig. 1 gezeigten Ausführungsform entsprechen, wobei die Rippen 9' nicht über die komplette axiale Breite der Profilblöcke 1a, 2a verlaufen sondern nur über einen Teil der axialen Erstreckung der Profilblöcke 1a, 2a von mindestens 50 %. Fig. 4 zeigt eine Ausführungsform, bei der in den Profilblöcken 1a der Profilblockreihe 1 die Rippen 9 gemäß der in Fig. 1 gezeigten Ausführungsform angeordnet und ausgeführt sind, in der Profilblockreihe 2 ist pro Profilblock 2a jeweils eine Rippe 9" vorgesehen, die unter einem größeren Winkel zur axialen Richtung verläuft als die Querrillen 7.

Die gegenseitige Positionierung der Rippen 9, 9', 9" innerhalb einer Profilblockreihe 1, 2 erfolgt gemäß einer geräuschoptimierten Abfolge, insbesondere derart, dass bestimmte Frequenzen, die im Geräuschspektrum der Pitchfolge durch die Längenvariation der Profilstrukturen, wie oben beschrieben, störend sind, gelöscht und Frequenzen an anderer Stelle im Spektrum Frequenzen generiert werden, die als weniger oder als nicht störend empfunden werden. Ziel der Positionierung der Rippen 9, 9', 9" ist daher eine "Verschiebung" von Frequenzen im Geräuschspektrum und damit eine subjektiv empfundene Geräuschreduzierung.

Bei der rechnerischen Ermittlung der Aufeinanderfolge der Rippen 9, 9', 9" und somit der Positionen der Rippen 9 auf den Profilblöcken 1a, 2a kann auf die beschriebenen vorteilhaften Positionen der Rippen 9 bei oder nahe von Profilblockkanten Rücksicht genommen werden. Die rechnerische Ermittlung der Positionen der Rippen 9, 9', 9" kann auch ergeben, dass die Positionen von Rippen 9, 9', 9" in Profilblöcken 1a, 2a , die zu einem Pitch bestimmter Umfangslänge L₁, L₂, L₃ gehören, variieren, sodass es also beispielsweise Profilblöcke 2a gibt, die zu einem Pitch der Länge L₃ gehören, die eine Rippen 9, 9', 9" besitzen und andere Profilblöcke 2a, die zu einem Pitch der Länge L₃ gehören, auf deren Oberseite zwei Rippen 9, 9', 9" verlaufen. Des Weiteren kann für jede Profilblockreihe oder für bestimmte Umfangsbereiche des Laufstreifens eine möglichst optimale Aufeinanderfolge und Anordnung der Rippen 9, 9', 9" über den Umfang ermittelt werden.

### Bezugszeichenliste

- 1: Profilblockreihe
- 2: Profilblockreihe
- 1a: Profilblock
- 2a: Profilblock
- 3: Umfangsrille
- 4: Umfangsrille
- 6: Querrille
- 7: Querrille
- 8: Abschnitt
- 9,9', 9": Rippe
- h: Höhe
- b: Breite

## Patentansprüche

1. Fahrzeugluftreifen, mit einem profilierten Laufstreifen mit Profilstrukturen, die Profilpositive, wie in Profilblockreihen (1,2) angeordnete Profilblöcke (1a, 2a), und Profilnegative, wie Umfangsrillen (3,4) und Querrillen (6,7), umfassen, wobei die Profilpositive über den Reifenumfang gemäß zumindest einer bestimmten Pitchfolge und nach einem Verfahren der Pitchlängenvariation geräuschoptimiert angeordnet sind,
**dadurch gekennzeichnet,**
**dass** auf Profilpositiven lokal Rippen (9, 9', 9") angeordnet sind, welche sich unter einem Winkel zur axialen Richtung des Laufstreifens erstrecken und über den Reifenumfang gemäß einer geräuschoptimierten Abfolge angeordnet sind, die sich von der Pitchfolge der Profilpositive, auf welchen die Rippen (9, 9', 9") positioniert sind, unterscheidet.

2. Fahrzeugluftreifen nach Anspruch 1, **dadurch gekennzeichnet, dass** sich die Rippen (9, 9', 9") unter einem Winkel von 5° bis 70° zur axialen Richtung erstrecken.

3. Fahrzeugluftreifen nach dem Anspruch 1 oder 2, **dadurch gekennzeichnet dass** die Rippen (9, 9',9") eine *in radialer Richtung ermittelte* Höhe (h) von 0,7 mm bis 1,2 mm aufweisen

4. Fahrzeugluftreifen nach dem Anspruch 3, **dadurch gekennzeichnet, dass** die Rippen (9, 9',9") eine konstante und für alle Rippen (9, 9', 9") gleich große *in radialer Richtung ermittele* Höhe (h) aufweisen.

5. Fahrzeugluftreifen nach Anspruch 1 oder 2, **dadurch gekennzeichnet, dass** die Rippen (9, 9', 9") eine *in Umfangsrichtung ermittelte* Breite (b) an oder bei ihrer Basis aufweisen, die zwischen 0,7 mm und 3 mm, insbesondere bis zu 2 mm, beträgt.

6. Fahrzeugluftreifen nach dem Anspruch 5, **dadurch gekennzeichnet, dass** die Rippen (9, 9', 9") *in Umfangsrichtung* eine konstante und für alle Rippen (9, 9', 9") gleich große Breite (b) aufweisen.

7. Fahrzeugluftreifen nach einer der Ansprüche 1 bis 6, **dadurch gekennzeichnet, dass** die *in Umfangsrichtung ermittelte* Breite (b) der Rippen (9, 9', 9") *gleichgroß oder größer ist als ihre in radialer Richtung ermittelte Höhe (h).*

8. Fahrzeugluftreifen nach einer der Ansprüche 1 bis 7, **dadurch gekennzeichnet, dass** die Rippen (9, 9', 9") im Querschnitt kuppelförmig, rechteckig, trapezförmig oder kreisabschnittförmig sind.

9. Fahrzeugluftreifen nach einer der Ansprüche 1 bis 8, **dadurch gekennzeichnet, dass** die Rippen (9, 9', 9") *entlang der kompletten axialen Erstreckung der Profilpositive verlaufen.*

10. Fahrzeugluftreifen nach einer der Ansprüche 1 bis 8, **dadurch gekennzeichnet, dass** die Rippen (9') über einen Teil der axialen Erstreckung der Profilpositive verlaufen, insbesondere über mindestens 50%.

11. Fahrzeugluftreifen mit Profilpositiven, die beispielsweise Profilblöcke (1a, 2a) einer Profilblockreihe sind und welche durch Querrillen (6, 7) strukturiert oder voneinander getrennt sind, nach einem oder mehreren der Ansprüche 1 bis 10, **dadurch gekennzeichnet, dass** auf Profilpositiven (la, 2a) zumindest eine Rippe (9, 9', 9") vorhanden ist, welche unmittelbar an eine der Rillenflanken einer Querrille (6, 7) anschließt.

12. Fahrzeugluftreifen mit Profilpositiven, die beispielsweise Profilblöcke (1a, 2a) einer Profilblockreihe sind und welche durch Querrillen (6, 7) strukturiert oder voneinander getrennt sind, nach einem oder mehreren der Ansprüche 1 bis 10, **dadurch gekennzeichnet, dass** auf Profilpositiven (1a, 2a) zumindest eine Rippe (9, 9', 9") vorhanden ist, welche von einer Rillenflanke einer Querrille (6, 7) in einem Abstand von höchstens 3 mm und parallel zur Querrille (6, 7) verläuft.

13. Fahrzeugluftreifen nach einem der Ansprüche 1 bis 12, **dadurch gekennzeichnet, dass** einzelne Profilpositive keine Rippen aufweisen.

14. Fahrzeugluftreifen nach einem der Ansprüche 1 bis 12, **dadurch gekennzeichnet, dass** Profilpositive vorhanden sind, welche mit ein bis zwei Rippen (9,9',9") versehen sind, wobei vorzugsweise auch Profilpositive vorhanden sind, welche mit mehr als zwei Rippen (9,9',9") versehen sind.

15. Fahrzeugluftreifen nach einer der Ansprüche 1 bis 14, **dadurch gekennzeichnet, dass** innerhalb eines Umfangabschnittes, insbesondere innerhalb einer Profilblockreihe (1, 2) oder eines Profilbandes, die Rippen (9, 9', 9") zueinander parallel verlaufen.

## Claims

1. Pneumatic vehicle tyre, with a profiled tread having profile structures, which comprise profile positives, such as profile blocks (la, 2a) arranged in rows of profile blocks (1, 2) and profile negatives, such as circumferential grooves (3, 4) and transverse grooves (6, 7), the profile positives being arranged over the circumference of the tyre in a noise-optimized manner according to at least one specific pitch sequence and on the basis of a method of pitch length variation, **characterized**
**in that** arranged locally on profile positives are ribs (9, 9', 9"), which extend at an angle to the axial direction of the tread and are arranged over the circumference of the tyre according to a noise-optimized sequence that differs from the pitch sequence of the profile positives on which the ribs (9, 9', 9") are positioned.

2. Pneumatic vehicle tyre according to Claim 1, **characterized in that** the ribs (9, 9', 9") extend in relation to the axial direction at an angle of 5° to 70°.

3. Pneumatic vehicle tyre according to Claim 1 or 2, **characterized in that** the ribs (9, 9', 9") have a height (h), determined in the radial direction, of from 0.7 mm to 1.2 mm.

4. Pneumatic vehicle tyre according to Claim 3, **characterized in that** the ribs (9, 9', 9") have a height (h), determined in the radial direction, that is constant and of the same size for all the ribs (9, 9', 9").

5. Pneumatic vehicle tyre according to Claim 1 or 2, **characterized in that** the ribs (9, 9', 9") have a width (b), determined in the circumferential direction, at or around their base that is between 0.7 mm and 3 mm, in particular up to 2 mm.

6. Pneumatic vehicle tyre according to Claim 5, **characterized in that** the ribs (9, 9', 9") have in the circumferential direction a width (b) that is constant and of the same size for all the ribs (9, 9', 9").

7. Pneumatic vehicle tyre according to one of Claims 1 to 6, **characterized in that** the width (b) of the ribs (9, 9', 9"), determined in the circumferential direction, is of the same size or greater than their height (h), determined in the radial direction.

8. Pneumatic vehicle tyre according to one of Claims 1 to 7, **characterized in that** the ribs (9, 9', 9") are in cross section dome-shaped, rectangular, trapezoidal or in the form of a segment of a circle.

9. Pneumatic vehicle tyre according to one of Claims 1 to 8, **characterized in that** the ribs (9, 9', 9") run along the complete axial extent of the profile positives.

10. Pneumatic vehicle tyre according to one of Claims 1 to 8, **characterized in that** the ribs (9') run over part of the axial extent of the profile positives, in particular over at least 50%.

11. Pneumatic vehicle tyre with profile positives, which are for example profile blocks (1a, 2a) of a row of profile blocks and which are structured or separated from one another by transverse grooves (6, 7), according to one or more of Claims 1 to 10, **characterized in that** on profile positives (la, 2a) there is at least one rib (9, 9', 9") that directly adjoins one of the groove flanks of a transverse groove (6, 7).

12. Pneumatic vehicle tyre with profile positives, which are for example profile blocks (la, 2a) of a row of profile blocks and which are structured or separated from one another by transverse grooves (6, 7), according to one or more of Claims 1 to 10, **characterized in that** on profile positives (1a, 2a) there is at least one rib (9, 9', 9") that runs from a groove flank of a transverse groove (6, 7) at a distance of at most 3 mm and parallel to the transverse groove (6, 7).

13. Pneumatic vehicle tyre according to one of Claims 1 to 12, **characterized in that** individual profile positives have no ribs.

14. Pneumatic vehicle tyre according to one of Claims 1 to 12, **characterized in that** there are profile positives that are provided with one to two ribs (9, 9', 9"), there preferably also being profile positives that are provided with more than two ribs (9, 9', 9").

15. Pneumatic vehicle tyre according to one of Claims 1 to 14, **characterized in that**, within a circumferential portion, in particular within a row of profile blocks (1, 2) or a profile band, the ribs (9, 9', 9") run parallel to one another.

## Revendications

1. Pneumatique de véhicule, doté d'une bande de roulement profilée avec des structures de profil comportant des éléments positifs, tels que des blocs de profil (la, 2a) agencés en rangées de blocs de profil (1, 2), et des éléments négatifs, tels que des rainures périphériques (3, 4) et des rainures transversales (6, 7), dans lequel les éléments positifs sont agencés sur le pourtour de la bande selon au moins une séquence déterminée et optimisés pour le bruit d'après un procédé de variation de la longueur de pas,
**caractérisé en ce que**
des stries (9, 9', 9") sont agencées localement sur les éléments positifs, lesquelles décrivent un angle dans la direction axiale de la bande et sont agencées sur le pourtour de la bande selon une succession optimisée pour le bruit, celle-ci étant différente de la séquence des éléments positifs sur lesquels les stries (9, 9', 9") sont positionnées.

2. Pneumatique de véhicule selon la revendication 1,
**caractérisé en ce que** les stries (9, 9', 9") décrivent un angle par rapport à la direction axiale de 5° à 70°.

3. Pneumatique de véhicule selon la revendication 1 ou 2, **caractérisé en ce que** les stries (9, 9', 9") comportent une hauteur (h) *déterminée dans la direction radiale* comprise entre 0,7 mm et 1,2 mm.

4. Pneumatique de véhicule selon la revendication 3,
**caractérisé en ce que** les stries (9, 9', 9") comportent une hauteur (h) *déterminée dans la direction radiale* constante et identique pour toutes les stries (9, 9', 9").

5. Pneumatique de véhicule selon la revendication 1 ou 2, **caractérisé en ce que** les stries (9, 9', 9") comportent une largeur (b) à leur base *déterminée dans la direction du pourtour* comprise entre 0,7 mm et 3 mm, en particulier comprise entre 0,7 mm et 2 mm.

6. Pneumatique de véhicule selon la revendication 5,
**caractérisé en ce que** les stries (9, 9', 9") comportent *dans la direction du pourtour* une largeur (b) constante et identique pour toutes les stries (9, 9', 9").

7. Pneumatique de véhicule selon l'une des revendications 1 à 6, **caractérisé en ce que** la largeur (b) des stries (9, 9', 9") *déterminée dans la direction du pourtour est égale ou supérieure à leur hauteur (h) déterminée dans la direction radiale.*

8. Pneumatique de véhicule selon l'une des revendications 1 à 7, **caractérisé en ce que** les stries (9, 9', 9") ont une section en forme de dôme, rectangulaire, trapézoïdale ou circulaire.

9. Pneumatique de véhicule selon l'une des revendications 1 à 8, **caractérisé en ce que** les stries (9, 9', 9") *parcourent en longueur toute l'étendue axiale de l'élément positif.*

10. Pneumatique de véhicule selon l'une des revendications 1 à 8, **caractérisé en ce que** les stries (9') parcourent en longueur une partie de l'étendue axiale de l'élément positif, en particulier sur au moins 50 % de celle-ci.

11. Pneumatique de véhicule, doté d'éléments positifs, qui sont par exemple des blocs de profil (la, 2a) d'une rangée de blocs de profil structurés ou séparés l'un de l'autre par des rainures transversales (6, 7), selon l'une des revendications 1 à 10, **caractérisé en ce qu'**au moins une strie (9, 9', 9") est présente sur les éléments positifs (la, 2a), laquelle est directement jointe au flanc de rainure d'une rainure transversale (6, 7).

12. Pneumatique de véhicule, doté d'éléments positifs, qui sont par exemple des blocs de profil (la, 2a) d'une rangée de blocs de profil structurés ou séparés l'un de l'autre par des rainures transversales (6, 7), selon l'une des revendications 1 à 10, **caractérisé en ce qu'**au moins une strie (9, 9', 9") est présente sur les éléments positifs (la, 2a), laquelle est parallèle à la rainure transversale (6, 7) et écartée de celle-ci de 3 mm au maximum.

13. Pneumatique de véhicule selon l'une des revendications 1 à 12, **caractérisé en ce que** des éléments positifs individuels ne comportent pas de stries.

14. Pneumatique de véhicule selon l'une des revendications 1 à 12, **caractérisé en ce que** des éléments positifs prévus dotés d'une à deux stries (9, 9', 9") sont présents, dans lequel des éléments positifs sont de préférence également prévus dotés de plus de deux stries (9, 9', 9").

15. Pneumatique de véhicule selon l'une des revendications 1 à 14, **caractérisé en ce qu'**à l'intérieur d'une section du pourtour, en particulier à l'intérieur d'une rangée de blocs de profil (1, 2) ou d'une bande de profil, les stries (9, 9', 9") sont parallèles les unes aux autres.
